(19) Europäisches Patentamt
European Patent Office
Office européen des brevets

(11) **EP 1 593 532 B1**

(12) **FASCICULE DE BREVET EUROPEEN**

(45) Date de publication et mention
de la délivrance du brevet:
**09.01.2013 Bulletin 2013/02**

(51) Int Cl.:
***B60C 23/04*** *(2006.01)*

(21) Numéro de dépôt: **05290930.6**

(22) Date de dépôt: **28.04.2005**

(54) **Système de controle de la pression des pneumatiques des roues d'un véhicule automobile**

System zur Steuerung des Reifenfülldrucks von Kraftfahrzeugrädern

System for controlling the tyre pressure of a motor vehicle

(84) Etats contractants désignés:
**DE ES FR GB IT**

(30) Priorité: **04.05.2004 FR 0404780**

(43) Date de publication de la demande:
**09.11.2005 Bulletin 2005/45**

(73) Titulaire: **Johnson Controls Technology Company
Holland, MI 49423 (US)**

(72) Inventeur: **Walraet, David
78100 Saint Germain en Laye (FR)**

(74) Mandataire: **Hemmelmann, Klaus et al
Johnson Controls GmbH
- Abteilung Patente -
Industriestrasse 20-30
51399 Burscheid (DE)**

(56) Documents cités:
**DE-A1- 19 849 390     FR-A- 2 833 523
US-B1- 6 466 887**

**Description**

La présente invention concerne les systèmes de contrôle de la pression des pneumatiques des roues des véhicules automobiles comprenant, sur chaque roue, un capteur de pression et un émetteur pour transmettre la pression à un organe de contrôle.

Dans ces systèmes, que l'on désigne dans le domaine par TPMS pour Tire Pressure Monitoring System, les signaux fournis par les capteurs de pression comportent des données qui permettent leur identification. Si l'on ne changeait jamais les roues d'un véhicule, un simple apprentissage initial, en usine, de l'appariement des signaux et des roues, permettrait de déterminer la localisation des capteurs par rapport au châssis du véhicule. Cette détermination est nécessaire pour localiser les pneumatiques défectueux.

Cependant, comme les roues d'un véhicule sont de temps à autre changées de position et interverties, le problème de la localisation de la roue sur lequel est monté le capteur reste posé.

Des solutions ont déjà été proposées. En particulier, la Demanderesse décrit dans la demande de brevet FR 0116368 un système de contrôle de la pression des pneumatiques dans lequel on compare des vitesses de rotation calculées à partir de données fournies par les capteurs de pression à celles déterminées par des capteurs fixes de vitesse de rotation de roue dont on connaît la localisation. Il s'agit notamment pour ces derniers des capteurs du système anti-blocage de roues, ABS (Anti-Blocking System). Le système ABS utilise un capteur propre à chaque roue donnant sa position angulaire sous forme d'impulsions. Celles-ci correspondent à des distances parcourues par la roue de l'ordre de quelques centimètres.

On sait que les roues d'un véhicule ne tournent pas toutes à la même vitesse. En ligne droite une différence dans la pression des pneumatiques par exemple ou bien dans le degré d'usure de la bande de roulement entraîne une différence du diamètre des roues donc de la vitesse de rotation. La dynamique du véhicule, la répartition de la charge, la température sont aussi des facteurs influençant la vitesse de rotation des roues les unes par rapport aux autres.

Quand la trajectoire est courbe, il s'y ajoute encore des écarts de vitesse de rotation dus à la différence des rayons de courbure des trajectoires des différentes roues.

On met donc à profit ces écarts pour procéder à cette détermination. Dans ce but, on calcule la différence entre la vitesse de chaque capteur fixe et celle calculée à partir des données fournies par les capteurs de pression. Ainsi, on peut associer à chacun des capteurs fixes, le capteur de pression dont l'écart de vitesse calculée est le plus faible. Ce système est avantageux dans la mesure où il utilise des moyens existants, donc sans surcoût. En outre, il se révèle être fiable compte tenu de la qualité des capteurs fixes du système anti-blocage de roues.

Cependant, les cas ne sont pas rares où les vitesses mesurées sont très proches les unes des autres. La convergence du calcul n'est alors pas rapide et le temps de réaction du système relativement long; on a compté jusqu'à 15 minutes. Les capteurs de pression sont alimentés par des batteries qui sont situées à l'intérieur des pneumatiques et donc d'accès difficile. Il est donc souhaitable de limiter autant que possible leur consommation en énergie. Une limitation de la durée d'émission des capteurs serait donc avantageuse.

Dans la demande FR 02 11 843, la Demanderesse, s'étant fixé comme objectif d'améliorer les moyens de localisation des roues dans un système de surveillance de la pression des pneus par un moyen permettant de réduire la durée d'émission des capteurs, proposait d'adjoindre au capteur de pression des moyens de détermination du déphasage entre deux émissions de signaux de pression effectuées à deux instants T1 et T2. Mais cette solution ne satisfait pas non plus tout à fait aux exigences d'efficacité qu'elle se proposait d'atteindre.

C'est pourquoi la Demanderesse propose maintenant un perfectionnement de cette invention.

Conformément à la présente invention, le système de contrôle de la pression des pneumatiques des roues d'un véhicule automobile comprend un organe de contrôle, un capteur de pression monté sur chaque roue associée à un émetteur par lequel il transmet à l'organe de contrôle un signal de pression comprenant au moins des données d'identification du capteur, et des moyens de détermination de la distance parcourue par chacune des roues, est caractérisé par le fait qu'il comprend en outre, des moyens de commande d'émission agencés pour commander l'émission des émetteurs lorsque leur roue associée présente une orientation prédéterminée, des moyens de datation des émissions, un module de calcul de la distance parcourue par chaque roue entre deux émissions, et un module de localisation par comparaison des distances déterminées par les dits moyens de détermination de la distance parcourue par la roue et des distances déterminées par ledit module de calcul.

Si C est la longueur de la circonférence de la roue, la distance parcourue par chaque roue entre deux émissions est celle correspondant à un nombre entier N de tours de roue, c'est-à-dire N.C. Sans déphasage des émissions, il suffit de compter le nombre N d'émissions reçues de l'émetteur entre deux instants T1 et T2 successifs d'émissions.

Il s'ensuit que la durée de localisation des roues peut être à la fois beaucoup plus rapide et fiable.

De plus, le déphasage DT entre les émissions à deux instants d'émission T1 et T2 + DT quelconques est une mesure de la distance parcourue par la roue modulo sa circonférence C. On peut donc aussi disposer d'une mesure continue et précise du déphasage angulaire de la roue pour mesurer, comme précédemment, la distance parcourue.

De préférence, les moyens de détermination de la distance parcourue comportent les capteurs fixes d'un dispositif anti-blocage de roue ou de correction de trajectoire.

De préférence également, les moyens de commande d'émission comportent un capteur accélérométrique à deux axes sensibles déterminant une orientation particulière unique de la force de gravitation terrestre par rapport à un référentiel solidaire de la roue.

Plus précisément, les moyens de commande d'émission comportent un capteur accélérométrique et un circuit électronique de traitement de réjection du signal qu'il fournit pour réjecter la composante continue de la force centrifuge et déterminer une orientation particulière unique de la force de gravitation terrestre dans un référentiel solidaire de la roue.

Ainsi, les deux axes sensibles étant positionnés dans un plan vertical, les moyens de commande d'émission déterminent une orientation particulière unique prédéterminée du référentiel solidaire de la roue par rapport au véhicule et peuvent commander l'émetteur au moment, T1 ou T2, où la roue est orientée selon cette orientation particulière unique.

Alternativement, au lieu d'un accéléromètre à deux axes sensibles, les moyens de commande d'émission comportent deux capteurs accélérométriques à un axe sensible, les deux axes sensibles étant inclinés l'un par rapport à l'autre et situés dans un plan vertical.

Par ce moyen équivalent, l'orientation particulière est également détectée sans ambiguïté, et l'algorithme de détection est très court, ce qui limite la consommation en énergie des batteries situées à l'intérieur des pneumatiques.

L'invention sera mieux comprise à l'aide de la description suivante du système de contrôle de la pression des pneumatiques de l'invention, en référence au dessin annexé, dans lequel :

Les figures 1A et 1B représentent chacune une roue de véhicule avec ses capteurs et où ont été dessinés les axes R1x, R1y et R2x, R2y et R2 des référentiels R1 et R2 respectivement solidaires du véhicule et de la roue,

la figure 2 représente le schéma par bloc du système de l'invention,

La figure 3 représente un diagramme des signaux fournis et exploité par le moyen de commande de l'émetteur, et

la figure 4 est un organigramme du principe de mesure des distances parcourues par les roues selon l'invention.

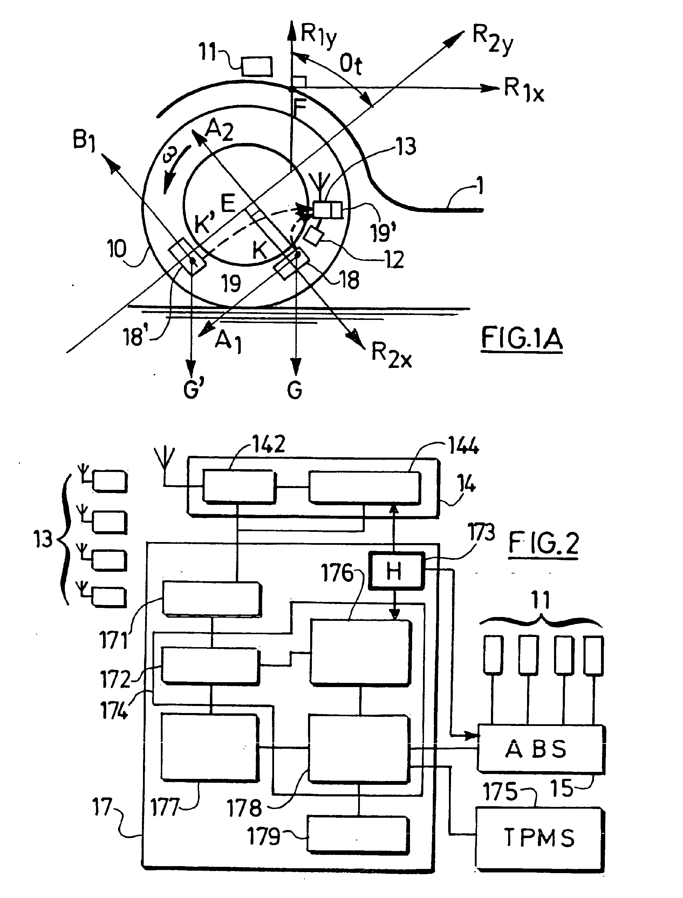

Comme on le voit sur la figure 1A, on prévoit pour chaque roue 10 un ensemble comportant un capteur 12 de pression P couplé à un émetteur 13, dans le pneumatique de la roue 10, et un capteur 11 ABS ou ESP situé sur le véhicule 1 en F à proximité de la roue 10.

On peut, en effet, à la place du dispositif ABS, utiliser un dispositif ESP (Electronic Stability Programm/ programme d'assistance électronique de trajectoire).

Le véhicule 1 est repéré grâce à un référentiel R1 fixe par rapport à lui, comportant deux axes orthogonaux R1x et R1y situés dans un plan vertical, et d'origine ramenée en F.

La roue 10 est repérée grâce à un référentiel R2 fixe par rapport à elle, comportant deux axes orthogonaux R2x et R2y situés dans un plan vertical, et d'origine ramenée en son centre E.

Quand la roue 10 tourne à une vitesse angulaire $\omega$, son référentiel R2 tourne et s'oriente relativement au référentiel R1 du véhicule selon un angle Ot, ou une orientation Ot, comme on voudra, en fonction du temps t. On a supposé, pour plus de simplicité, que le véhicule n'est pas en phase de virage.

Ici, l'émetteur 13 est commandé, de la façon dont il sera expliqué plus loin, par un circuit électronique 19 d'un capteur accélérométrique 18 à deux axes A1 et A2, par exemple un capteur piézoélectrique, fixé en K dans le pneumatique de la roue 10. Il revient au même de prévoir deux capteurs accélérométriques 18 et 18' à un axe chacun, respectivement représentés par A1 et B1, situés en K et K'. L'axe B1, étant parallèle à A2, joue alors exactement le même rôle que A2, mais il n'est pas nécessaire que les accéléromètres 18 et 18' aient leurs axes sensibles orthogonaux. Dans ce cas, les accéléromètres sont équipés chacun d'un circuit électronique 19, 19' de traitement des signaux fournis.

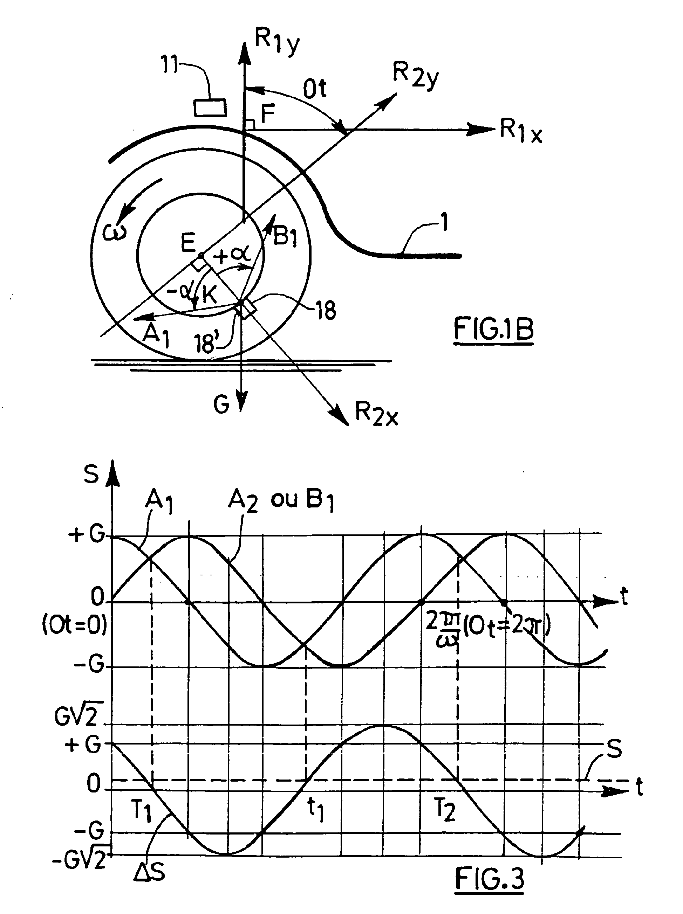

Dans une forme de réalisation préférée les points K et K' sont confondus en K et les axes A1 et B1 forment un angle (A1, B1) admettant l'axe R2x ou R2y comme bisectrice et font tous deux avec cet axe un angle $\alpha$ comme représenté en figure 1B.

En référence à la figure 2, un récepteur fixe 14 monté sur le véhicule reçoit les signaux émis par les émetteurs 13 à des instants T1, T2, ... déterminés par la suite.

Outre un module radio 142 transformant les signaux radio en données numériques, le récepteur 14 comprend aussi des moyens de datation cadencés par une horloge 173, l'ensemble assurant la datation T des signaux reçus P et autres précisés par la suite. Les signaux et leur datation sont transmis à un organe de contrôle 17 comportant un microprocesseur 174 et mémorisés dans une mémoire de signaux reçus 177. Un pilote 171 pilote le récepteur 14.

Par ailleurs, l'organe 17 reçoit les données D de distances parcourues par les roues et leur datation T', évaluées à partir des capteurs 11 grâce, par exemple, au dispositif ABS 15, ainsi que la localisation, ou l'identification $I_{ABS}$, des capteurs 11 à la source de l'évaluation de ces distances. Ces données sont mémorisées dans une mémoire de distances parcourues 179.

Pour coordonner l'ensemble, le microprocesseur 174 comporte enfin un superviseur temps réel 176 cadencé par l'horloge 173, un module 172 de calcul de distances et un module 178 de localisation par comparaison des distances parcourues.

Ces moyens permettent à l'organe de contrôle 17 de délivrer les données de pression, d'identification et de localisation à un composant TPMS 175 de gestion de ces données déjà décrit dans les documents déjà cités.

Le fonctionnement du système va maintenant être décrit.

Quand la roue 10 tourne à la vitesse angulaire $\omega$, les axes accéléromètriques A1, d'une part, et A2 ou B1, d'autre part, délivrent aux circuits électroniques 19 ou 19' les signaux référencés par les mêmes repères utilisés sur les courbes d'amplitudes en fonction du temps t, représentées en partie supérieure de la figure 3. En vitesse uniforme, ces signaux sont sinusoïdaux d'amplitude donnée par la force G de gravitation terrestre, de période $2.\pi / \omega$, ordinairement centrés sur les composantes continues FC1, FC2 de la force centrifuge ressentie par les capteurs. Ils sont déphasés l'un par rapport à l'autre d'un angle de $\pi / 4$. Si les axes ne sont pas orthogonaux, ce déphasage est différent, mais ça ne change pas le fonctionnement dans son principe.

Normalement, les composantes continues FC1 et FC2 sont réjectées des signaux par les circuits 19 et 19' pour rendre ces derniers centrés sur 0, mais dans la forme de réalisation préférée les deux signaux A1 et B1, comme montrés sur la figure 3 centrés sur une composante FC1 = FC1 = Fc unique et n'ont pas besoin d'être réjectés comme il sera expliqué ci-après.

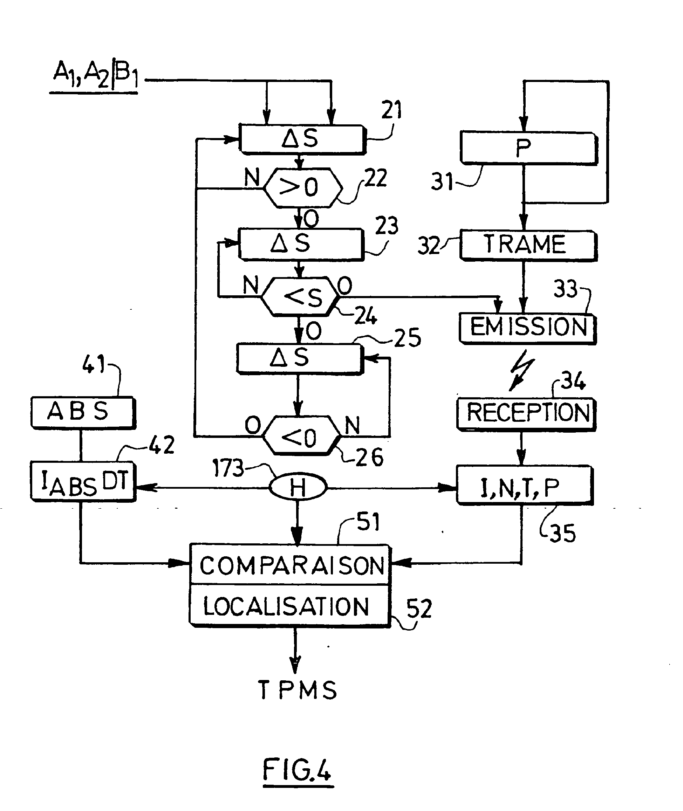

Les circuits électroniques 19 ou 19', lors des étapes 21, 23, 25, en référence à la figure 4, effectuent une soustraction, de préférence analogique à l'aide d'un amplificateur opérationnel, ou numérique, des signaux A1 et A2 ou B1 pour obtenir une différence $\Delta S$ conformément à la courbe repérée de la même manière sur la partie inférieure de la figure 3. On note alors que, dans la forme de réalisation préférée, en calculant $\Delta s$, parce qu'elles sont opposées, on réjecte automatiquement FC 1 et FC2 du signal.

En régime de vitesse constante, cette courbe est une sinusoïde d'amplitude $G\sqrt{2}$ et de période identique à la précédente.

Le signal $\Delta S$ est traité, toujours dans le circuit électronique 19 ou 19', conformément aux étapes 21 à 26 de l'organigramme de la figure 4, pour détecter ses passages à zéro tels qu'aux instants T1 et T2, tout en éliminant les passages à zéro tels qu'aux instants t1 qui correspondent à des demi-tours de la roue 10. A ces instants T1, T2, ..., le référentiel R2 de la roue 10 est orienté selon un angle ou une orientation Oto par rapport à R1, référentiel du véhicule, c'est-à-dire par rapport à la direction de la force de gravitation G.

Pour cela, à l'étape 22, on élimine les instants tels que t1 en ne sélectionnant que les passages à zéro dans le sens $\Delta S$ positif vers $\Delta S$ négatif, et si $\Delta S$ est négatif on attend son changement de signe (à un instant tel que t1 sur la figure).

A l'étape 23, on calcule $\Delta S$ en attente de son passage à zéro pour une commande d'émission. A l'étape 24, on détecte le passage à zéro du signal en le comparant à un seuil S en dessous duquel il est considéré comme tel.

Quand le seuil S est atteint, on déclenche l'étape 33 pour que l'émetteur 13 exécute l'émission des signaux de pression élaborés par le capteur 12 lors de l'étape 31, selon une trame générée par ce même capteur lors de l'étape 32.

Avantageusement, lorsque le système n'est pourvu que d'un seul accéléromètre, ce sera la détection du niveau de la composante alternative du signal, après réjection de la composante continue, qui permettra de déclencher l'étape 33. Ce signal pourra être traité de façon similaire au signal $\Delta S$ décrit plus haut.

Ainsi, pour chaque roue, les moyens de commande de l'émetteur détectent les instants T1, T2, ... , successifs correspondant aux passages de la roue à l'orientation Oto, numérotés d'ordre N1, N2,... N, et commandent l'émetteur à ces instants qui correspondent à des tours entiers de roue, à des distances correspondant à des longueurs entières de circonférence C de la roue.

Parallèlement, on déclenche les étapes 25 et 26 pour attendre le passage effectif de $\Delta S$ à des valeurs négatives de façon à ne pas provoquer deux émissions successives dans le même tour de roue.

Il pourra être adjoint au système une temporisation limitant le nombre d'émissions, particulièrement lorsque la vitesse devient importante.

Après réception, l'étape 34 de réception, exécutée par le module radio 142 du récepteur 14, déclenche l'étape 35 de constitution de la trame contenant les données d'identification I, de datation T, de pression P, contenant éventuellement la numérotation N des tours de roue. Cette étape 35 est exécutée par les moyens de datation 144 et 173, puis complétée par le module 172 de calcul des distances « TPMS » selon la formule :

$$D_{tpms} = C.N.$$

Lors de cette même étape, le module de calcul 172 mémorise ensuite ces données calculées dans la mémoire 177 avec la pression, leur datation et leur identification.

Parallèlement, le système ABS exécute ses algorithmes habituels 41 pour fournir ses données de distance D, et l'identification $I_{ABS}$ du capteur ABS.

Lors de l'étape 42, le module ABS 15 y joint la datation T' de ces données, T' étant fournie par le module 173, et mémorise ces données « ABS » dans la mémoire 179 par les soins du module de localisation 178.

Disposant des mémoires 177 et 179, les comparaisons des distances D et $D_{tpms}$ contenues dans les

données ABS et TPMS peuvent être effectuées lors de l'étape 51 par le module de localisation 178, pour en déduire, lors de l'étape 52, la localisation des roues, c'est-à-dire la correspondance entre les identifications I et $I_{ABS}$, comme l'homme de l'art sait le faire, notamment en référence aux documents déjà cités.

**Revendications**

1. Système de contrôle de la pression des pneumatiques des roues (10) d'un véhicule automobile (1) comprenant
un organe de contrôle (17),
un capteur (12) de pression monté sur chaque roue associé à un émetteur (13) par lequel il transmet à l'organe de contrôle (17) un signal de pression comprenant au moins des données (I) d'identification du capteur (12), et
des moyens (11, 15) de détermination de la distance parcourue par chacune des roues,
**caractérisé par le fait qu'**il comprend en outre,
des moyens (18, 19 ; 18', 19') de commande d'émission agencés pour commander l'émission des émetteurs (13) lorsque leur roue associée présente une orientation (Oto) prédéterminée,
des moyens de datation (173, 144) des émissions,
un module de calcul (172) de la distance parcourue par chaque roue entre deux émissions, et
un module de localisation (178) par comparaison des distances déterminées par les dits moyens de détermination (11, 15) de la distance parcourue par chacune des roues et des distances déterminées par le dit module de calcul (172).

2. Système selon la revendication 1, dans lequel les moyens de détermination (11, 15) de la distance parcourue comportent les capteurs fixes (11) d'un dispositif anti-blocage de roue ou correcteur de trajectoire.

3. Système selon l'une des revendications 1 et 2, dans lequel les moyens (18, 19 ; 18', 19') de commande d'émission comportent un capteur accélérométrique (18) à deux axes sensibles (A1, A2).

4. Système selon la revendication 3, dans lequel un circuit électronique (19) du capteur accélérométrique à deux axes sensibles est agencé pour déterminer une orientation particulière (Oto) prédéterminée de la force de gravité terrestre (G) par rapport au référentiel R2 de la roue (10).

5. Système selon l'une des revendications 1 et 2, dans lequel les moyens (18, 19 ; 18', 19') de commande d'émission comportent deux capteurs accélérométriques (18, 18') à un axe sensible (A1 ; B1).

6. Système selon l'une des revendications 3 à 5, dans lequel les deux axes sensibles (A1, B1) sont inclinés l'un par rapport à l'autre.

7. Système selon l'une des revendications 3 à 6, dans lequel le ou les deux axes sensibles (A1; A2, B1) sont positionnés dans le plan de la roue.

8. Système selon l'une des revendications 1 à 7, dans lequel les moyens (18, 19 ; 18', 19') de commande d'émission sont agencés pour commander l'émetteur (13) au moment où la roue est orientée selon une orientation particulière (Oto) prédéterminée.

9. Système selon la revendication 8, dans lequel l'orientation particulière prédéterminée (Oto) est une orientation prédéterminée du référentiel R2 de la roue par rapport à l'orientation de la force (G) de gravitation terrestre.

10. Système selon l'une des revendications 4 à 9, dans lequel les moyens de commande d'émission (18, 18', 19, 19') comportent un capteur accélérométrique (18, 18') et un circuit électronique (19, 19') de traitement de réjection du signal (A1, B1, A2) qu'il fournit pour réjecter la composante (Fc, Fc1, Fc2) continue de la force centrifuge et déterminer une orientation particulière Oto unique de la force de gravitation terrestre (G) dans un référentiel (R2x, R2y) solidaire de la roue (10).

**Claims**

1. System for monitoring the pressure of the tyres of the wheels (10) of a motor vehicle (1) comprising a monitoring member (17),
a pressure sensor (12) mounted on each wheel and associated with an emitter (13) by which it transmits to the monitoring member (17) a pressure signal comprising at least data (I) identifying the sensor (12), and
means (11, 15) for determining the distance travelled by each of the wheels,
**characterized by** the fact that it furthermore comprises,
emission control means (18, 19; 18', 19') designed to control the emission of the emitters (13) when their associated wheel exhibits a predetermined orientation (Oto),
means (173, 144) for date-stamping the emissions,
a module (172) for calculating the distance travelled by each wheel between two emissions, and
a module for location (178) by comparing the distances determined by the said means (11, 15) for determining the distance travelled by each of the wheels and the distances determined by the said calculation module (172).

**2.** System according to Claim 1, in which the means (11, 15) for determining the distance travelled comprise the fixed sensors (11) of a wheel anti-lock device or trajectory corrector.

**3.** System according to one of Claims 1 and 2, in which the emission control means (18, 19; 18', 19') comprise an accelerometric sensor (18) with two sensitive axes (A1, A2).

**4.** System according to Claim 3, in which an electronic circuit (19) of the accelerometric sensor with two sensitive axes is designed to determine a predetermined particular orientation (Oto) of the terrestrial gravity force (G) with respect to the frame of reference R2 of the wheel (10).

**5.** System according to one of Claims 1 and 2, in which the emission control means (18, 19; 18', 19') comprise two accelerometric sensors (18, 18') with one sensitive axis (A1; B1).

**6.** System according to one of Claims 3 to 5, in which the two sensitive axes (A1, B1) are inclined one with respect to the other.

**7.** System according to one of Claims 3 to 6, in which the one or two sensitive axes (A1; A2, B1) are positioned in the plane of the wheel.

**8.** System according to one of Claims 1 to 7, in which the emission control means (18, 19; 18', 19') are designed to control the emitter (13) at the moment at which the wheel is oriented according to a predetermined particular orientation (Oto).

**9.** System according to Claim 8, in which the predetermined particular orientation (Oto) is a predetermined orientation of the frame of reference R2 of the wheel with respect to the orientation of the terrestrial gravitational force (G).

**10.** System according to one of Claims 4 to 9, in which the emission control means (18, 18', 19, 19') comprise an accelerometric sensor (18, 18') and an electronic processing circuit (19, 19') for rejecting the signal (A1, B1, A2) that it provides so as to reject the continuous component (Fc, Fc1, Fc2) of the centrifugal force and to determine a unique particular orientation Oto of the terrestrial gravitation force (G) in a frame of reference (R2x, R2y) tied to the wheel (10).

**Patentansprüche**

**1.** System zur Kontrolle des Fülldrucks der Luftreifen der Räder (10) eines Kraftfahrzeugs (1), das enthält

ein Kontrollorgan (17),
einen auf jedes Rad montierten Drucksensor (12), der einem Sender (13) zugeordnet ist, durch den er an das Kontrollorgan (17) ein Drucksignal überträgt, das mindestens Identifikationsdaten (I) des Sensors (12) enthält, und
Einrichtungen (11, 15) zur Bestimmung der von jedem der Räder zurückgelegten Strecke,
**dadurch gekennzeichnet, dass** es außerdem enthält Einrichtungen (18, 19; 18', 19') zur Sendesteuerung, die eingerichtet sind, um das Senden der Sender (13) zu steuern, wenn ihr zugeordnetes Rad eine vorbestimmte Ausrichtung (Oto) hat,
Datierungseinrichtungen (173, 144) der Sendungen,
ein Modul zur Berechnung (172) der von jedem Rad zwischen zwei Sendungen zurückgelegten Strecke, und
ein Modul der Lokalisierung (178) durch Vergleich der durch die Einrichtungen (11, 15) zur Bestimmung der von jedem der Räder zurückgelegten Strecke bestimmten Strecken mit den von dem Rechenmodul (172) bestimmten Strecken.

**2.** System nach Anspruch 1, bei dem die Einrichtungen zur Bestimmung (11, 15) der zurückgelegten Strecke die ortsfesten Sensoren (11) einer Antiblockier- oder Kurskorrekturvorrichtung aufweisen.

**3.** System nach einem der Ansprüche 1 und 2, bei dem die Sendesteuereinrichtungen (18, 19; 18', 19') einen Beschleunigungssensor (18) mit zwei empfindlichen Achsen (A1, A2) aufweisen.

**4.** System nach Anspruch 3, bei dem eine elektronische Schaltung (19) des Beschleunigungssensors mit zwei empfindlichen Achsen eingerichtet ist, um eine vorbestimmte besondere Ausrichtung (Oto) der Erdgravitation (G) bezüglich des Bezugssystems R2 des Rads (10) zu bestimmen.

**5.** System nach einem der Ansprüche 1 und 2, bei dem die Sendesteuereinrichtungen (18, 19; 18', 19') zwei Beschleunigungssensoren (18, 18') mit einer empfindlichen Achse (A1; B1) enthalten.

**6.** System nach einem der Ansprüche 3 bis 5, bei dem die zwei empfindlichen Achsen (A1, B1) zueinander geneigt sind.

**7.** System nach einem der Ansprüche 3 bis 6, bei dem die oder die zwei empfindlichen Achsen (A1; A2, B1) in der Ebene des Rads positioniert sind.

**8.** System nach einem der Ansprüche 1 bis 7, bei dem die Sendesteuereinrichtungen (18, 19; 18', 19') eingerichtet sind, um den Sender (13) in dem Moment zu steuern, in dem das Rad gemäß einer vorbestimmten besonderen Ausrichtung (Oto) ausgerichtet ist.

9.    System nach Anspruch 8, bei dem die vorbestimmte besondere Ausrichtung (Oto) eine vorbestimmte Ausrichtung des Bezugssystems R2 des Rads bezüglich der Ausrichtung der Erdgravitationskraft (G) ist.

10.    System nach einem der Ansprüche 4 bis 9, bei dem die Sendesteuerungseinrichtungen (18, 18', 19, 19') einen Beschleunigungssensor (18, 18') und eine elektronische Schaltung (19, 19') zur Unterdrükkungsverarbeitung des von ihm gelieferten Signals (A1, B1, A2) enthalten, um den Gleichanteil (Fc, Fc1, Fc2) der Zentrifugalkraft zu unterdrücken und eine einzige besondere Ausrichtung Oto der Erdgravitationskraft (G) in einem fest mit dem Rad (10) verbundenen Bezugssystem (R2x, R2y) zu bestimmen.

FIG.1A

FIG.2

FIG.1B

FIG.3

FIG.4

**EP 1 593 532 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0116368
- FR 0211843